# EUROPÄISCHE PATENTSCHRIFT

(11) **EP 3 478 549 B1**
(45) Veröffentlichungstag und Bekanntmachung des Hinweises auf die Patenterteilung: **30.09.2020**
(21) Anmeldenummer: 17797252.8
(22) Anmeldetag: 23.10.2017
(51) Int. Cl.: B60W 50/029

(54) **VERFAHREN ZUM TEIL- ODER VOLLAUTONOMEN FÜHREN EINES KRAFTFAHRZEUGS DURCH EINE STEUERVORRICHTUNG SOWIE STEUERVORRICHTUNG UND KRAFTFAHRZEUG**
METHOD FOR OPERATING A MOTOR VEHICLE IN A SEMIAUTONOMOUS OR IN A FULL AUTONOMOUS MANNER THROUGH A CONTROL DEVICE, AS WELL AS CONTROL DEVICE AND MOTOR VEHICLE
PROCÉDÉ DE FONCTIONNEMENT SEMI-AUTONOME OU ENTIÈREMENT AUTONOME D'UN VÉHICULE AUTOMOBILE PAR L'INTERMÉDIAIRE D'UN DISPOSITIF DE COMMANDE, AINSI QUE DISPOSITIF DE COMMANDE ET V'EHICULE AUTOMOBILE

(30) Priorität: 03.11.2016 DE 102016221581
(43) Veröffentlichungstag der Anmeldung: 08.05.2019
(73) Patentinhaber: Audi AG, 85045 Ingolstadt (DE)
(72) Erfinder: SCHMITT, Nicholas, 85049 Ingolstadt (DE); MAIWALD, Stefan, 85055 Ingolstadt (DE)
(86) Internationale Anmeldenummer: PCT/EP2017/076973
(87) Internationale Veröffentlichungsnummer: WO 2018/082953

(56) Entgegenhaltungen:
- EP-A1- 2 314 490
- DE-A1-102012 211 901
- DE-A1-102012 222 490
- DE-A1-102013 216 945
- DE-A1-102013 222 048
- DE-A1-102014 013 960
- JP-A- 2011 240 816
- US-A1- 2016 090 100

## Beschreibung

Die Erfindung betrifft ein Verfahren zum teilautonomen oder vollautonomen Führen eines Kraftfahrzeugs durch eine Steuervorrichtung. Je nach Grad der Autonomie (Teilautonomie / Vollautonomie) führt die Steuervorrichtung die Längsführung (Lenken) und/oder Querführung (Beschleunigen und Abbremsen) anstelle eines Fahrers aus. Hierzu ist ein Regler bereitgestellt, der mittels eines Reglermodells oder Regelalgorithmus Stellsignale zum Führen des Kraftfahrzeugs erzeugt. Zu der Erfindung gehören auch die Steuervorrichtung sowie ein Kraftfahrzeug, welches die Steuervorrichtung aufweist.

In einem Kraftfahrzeug kann vorgesehen sein, dass eine Steuervorrichtung einen sogenannten Fahreingriff durchgeführt, d.h. bei Erkennen einer Notsituation das Führen des Fahrzeugs selbsttätig übernimmt, wenn der Fahrer in der Notlage überfordert ist.

Aus der DE 10 2012 001 312 A1 ist hierzu bekannt, dass ein Fahrerassistenzsystem eine Fahruntüchtigkeit des Fahrers erkennt und daraufhin selbsttätig einen Nothalt des Kraftfahrzeugs herbeiführt.

Aus der DE 10 2014 006 261 A1 ist zum Entschärfen einer Notfallsituation ein Verfahren bekannt, bei welchem ein Fahrerassistenzsystem ein Verzögerungsmanöver des Kraftfahrzeugs ausführt, falls erkannt wird, dass das Kraftfahrzeug führerlos ist, weil der Fahrer beispielsweise seine Hände nicht am Lenkrad hält.

Aus der DE 10 2015 105 581 A1 ist bekannt, einen Fahrer mittels Sensoren auf krankhafte Ereignisse zu überwachen und einen Autopiloten zu aktivieren, falls der Fahrer beispielsweise einen Herzinfarkt erleidet.

Aus der DE 10 2012 222 490 A1 ist ein Verfahren zur Erhöhung der Fahrstabilität eines Fahrzeugs, welches mit Raddrehzahlsensoren an allen Rädern und einem Bremssystem ausgestattet ist, das zumindest eine radindividuelle Verringerung der Bremskraft gestattet, bekannt. Bei einem plötzliche Reifendruckverlust, insbesondere einem Platzen eines Reifens, kann eine Giermomentenabschwächung während der Bremsung durch den Fahrer erfolgen.

Aus der DE 10 2013 216 945 A1 sind ein Aquaplaning-Fahrassistenzsystem und ein mit diesem durchzuführendes Verfahren zur automatisierten Unterstützung eines Fahrers beim Führen eines Kraftfahrzeugs in einer Aquaplaning-Fahrsituation bekannt.

Die im Stand der Technik verwendeten Fahrerassistenzsysteme für Autopilot-Funktionen sind in der Lage, ein führerloses Kraftfahrzeug mittels eines autonomen Fahrmanövers in einen vorbestimmten sicheren Zustand zu führen. Allerdings setzten Fahrerassistenzsysteme dieser Art voraus, dass sie mit ihrem Regler in der Lage sind, das Kraftfahrzeug besser zu führen als der Fahrer selbst.

Eine Grenzsituation, in welcher dies nicht unbedingt der Fall ist, ist ein Schaden am Kraftfahrzeug selbst, beispielsweise ein geplatzter Reifen (Reifenplatzer). Verliert hierbei der Fahrer die Kontrolle über das Fahrzeug und übernimmt deshalb eine Steuervorrichtung eines Fahrerassistenzsystems die Führung des Kraftfahrzeugs, so muss dies nicht unbedingt zu einer Verbesserung des Führungsverhaltens führen, da die Reglereinheit der Steuervorrichtung ihre Stellsignale unter der Voraussetzung erzeugt, dass sich das Kraftfahrzeug ordnungsgemäß oder bestimmungsgemäß verhält. Mit anderen Worten ist die Reglereinheit nicht auf eine veränderte Fahrdynamik des Kraftfahrzeugs eingestellt, wie sie durch eine beschädigte Fahrzeugkomponente, beispielsweise einen Reifenplatzer, verursacht wird.

Der Erfindung liegt die Aufgabe zugrunde, für eine Fahrerassistenz in einem Kraftfahrzeug eine Steuervorrichtung dahingehend zu ertüchtigen, dass sie einen Fahrer unterstützt, falls der Fahrer die Kontrolle über das Kraftfahrzeug zu verlieren droht.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Die Erfindung geht aus von einem Verfahren zum teilautonomen oder vollautonomen Führen eines Kraftfahrzeugs. Das Verfahren kann durch ein Steuergerät oder allgemein durch eine Steuervorrichtung durchgeführt werden. Die Steuervorrichtung ist hierzu mit Fahrzeugkomponenten für eine Längsführung und/oder Querführung des Kraftfahrzeugs gekoppelt. Eine solche Fahrzeugkomponente kann beispielsweise eine Lenkanlage (Lenkung) und/oder ein Fahrantrieb (Motor) und/oder eine Bremsanlage (Bremse) sein. Zum Erzeugen von Stellsignalen für diese Fahrzeugkomponenten weist die Steuervorrichtung eine Reglereinheit auf, um auf der Grundlage eines Reglermodells die Stellsignale beispielsweise in Abhängigkeit von zumindest einem Sensorsignal zu erzeugen. Mit Reglermodell ist hierbei der Regelalgorithmus gemeint, welchen die Reglereinheit zum Erzeugen der Stellsignale ausführt oder durchführt. Das Reglermodells kann beispielsweise ein Streckenmodell der Regelstrecke aufweisen, welches das fahrdynamische Verhalten des Kraftfahrzeugs beschreibt. Beispielsweise kann ein solches Reglermodells auf dem sogenannten Einspurmodells eines Kraftfahrzeugs beruhen.

Die Steuervorrichtung kann also beispielsweise das zumindest eine Sensorsignal empfangen und mittels eines Standard-Reglermodells die Stellsignale für die Fahrzeugkomponenten erzeugen, um zumindest ein Fahrmanöver teilautonom (beispielsweise nur Längsführung oder nur Querführung) oder vollautonomen (sowohl Längsführung als auch Querführung) durchzuführen. Ein solches Standard-Reglermodell beschreibt hierbei die Fahrzeugkomponenten als voll funktionstüchtig, d.h. jede angesteuerte Fahrzeugkomponente reagiert in bestimmungsgemäßer Weise.

Erfindungsgemäß ist nun vorgesehen, dass durch die Steuervorrichtung zusätzlich ein Ausfall-Reglermodell bereitgestellt wird, durch welches eine Ausfallsituation modelliert ist. Die Ausfallsituation ist dadurch gekennzeichnet, dass zumindest eine der Fahrzeugkomponenten funktionsuntüchtig ist. Funktionsuntüchtig kann eine Fahrzeugkomponente beispielsweise sein, wenn sie verschlissen ist (beispielsweise im Falle von Bremsbelägen) oder beschädigt ist, also beispielsweise gebrochen ist. Ein Stellsignal für eine solche funktionsuntüchtig Fahrzeugkomponente muss also ein durch den Verschleiß oder die Beschädigung verursachtes verändertes Komponentenverhalten berücksichtigen oder kompensieren.

Während einer Fahrt des Kraftfahrzeugs kann die erfindungsgemäße Steuervorrichtung aus einer Detektionseinrichtung ein Ausfallsignal empfangen, welches eine Ausfallsituation signalisiert, also beispielsweise den besagten Reifenplatzer oder eine gebrochene Lenkstange. Die Detektionseinrichtung kann also die Ausfallsituation detektieren. Die Steuervorrichtung schaltet dann in Abhängigkeit von dem Ausfallsignal in ihrer Reglereinheit von dem Standard-Reglermodell auf das Ausfall-Reglermodell um. Die Reglereinheit erzeugt also nun ihre Stellsignale für die Fahrzeugkomponenten nicht auf der Grundlage des Standard-Reglermodells, sondern auf der Grundlage des Ausfall-Reglermodells. Somit ist in den Stellsignalen das veränderte Verhalten der zumindest einen funktionsuntüchtigen Fahrzeugkomponente berücksichtigt. Die Steuervorrichtung manövriert dann das Kraftfahrzeug mittels der umgeschalteten Reglereinheit in einen vorbestimmten sicheren Zustand. Da die hierzu erzeugten Stellsignale an die zumindest eine funktionsuntüchtig Fahrzeugkomponente angepasst sind, kommt es hierbei nicht zu einer Fehlsteuerung aufgrund einer falschen Annahme im Reglermodell.

Durch die Erfindung ergibt sich der Vorteil, dass bei einem veränderten fahrdynamischen Verhalten des Kraftfahrzeugs aufgrund zumindest einer funktionsuntüchtigen Fahrzeugkomponente die Steuervorrichtung auf diese Ausfallsituation reagieren kann, während dies bei dem Fahrer selbst nicht der Fall sein muss, weil der Fahrer beispielsweise nicht über die nötige Fahrerfahrung zum Führen eines Kraftfahrzeugs in dieser Ausfallsituation verfügt. Beispielsweise kann also bei einem Reifenplatzer der Fahrer dahingehend unterstützt werden, dass die Steuervorrichtung das Kraftfahrzeug in den sicheren Zustand manövrieren kann. Die Steuervorrichtung passt ihr Regelverhalten dabei an die zumindest eine funktionsuntüchtige Fahrzeugkomponente an.

Der Regelalgorithmus, der sich durch das Ausfall-Reglermodell ergibt, kann zum Beispiel aus gemessenen Reaktionen von Profifahrern oder Rennfahrern abgeleitet sein. Entsprechend ist also vorgesehen, dass durch das Ausfall-Reglermodell ein Verhalten zumindest einer vorbestimmten Person nachgebildet wird. Es kann auch das Verhalten mehrerer vorbestimmter Personen nachgebildet sein, indem beispielsweise ein Mittelwert über Fahrtrajektorien gebildet wird, die von unterschiedlichen Personen in einer Ausfallsituation gewählt und in Testfahrten gemessen worden sind.

Zu der Erfindung gehören auch vorteilhafte Weiterbildungen, durch deren Merkmale sich zusätzliche Vorteile ergeben.

Wie bereits ausgeführt, ist bei einer Steuervorrichtung eines Fahrerassistenzsystems im Stand der Technik vorausgesetzt, dass alle Fahrzeugkomponenten intakt sind. Dagegen ist bei dem Ausfall-Reglermodell für die Reglereinheit der Steuervorrichtung gemäß dem erfindungsgemäßen Verfahren bevorzugt vorgesehen, dass dieses Ausfall-Reglermodell eine der folgenden Ausfallsituationen modelliert: einen Achsbruch, einen Reifenplatzer, einen Federbeinbruch, ein Ausbleiben der Traktionsleistung (d.h. einen Motorausfall) ein Ausbleiben einer Bremswirkung (d.h. ein Versagen der Bremsanlage oder einzelner Bremsen), ein Aquaplaning, eine ungleichmäßige Reifenhaftung (sogenannter µ-Split) und/oder eine verschlissene Bremse (d.h. eine reduzierte Bremsleistung). Eine solche jeweilige Ausfallsituation überfordert in der Regel einen Fahrer des Kraftfahrzeugs. Hier kann also durch einen Fahreingriff der Steuervorrichtung ein an die Ausfallsituation angepasstes Führungsverhalten bereitgestellt werden.

Durch das Ausfall-Reglermodell wird hierbei bevorzugt im Vergleich zum Standard-Reglermodell eine veränderte Längsdynamikregelung und/oder Querdynamikregelung durch die Reglereinheit durchgeführt. Es erfolgt also ein Umschalten des Regelungsverfahrens oder des Regelalgorithmus. Hierbei wird die Längsdynamik und/oder Querdynamik des Kraftfahrzeugs unter Berücksichtigung der Ausfallsituation geregelt.

Bevorzugt erfolgt durch das Verfahren die Entziehung der Kontrolle über das Kraftfahrzeug vom Fahrer. Mit anderen Worten wird in Abhängigkeit von dem besagten Ausfallsignal, welches die Ausfallsituation signalisiert, die Steuervorrichtung ohne Fahrereinwirkung oder ohne ein Zutun des Fahrers aktiviert. Der Fahrer muss also nicht erst dahingehend reagieren, dass er die Steuervorrichtung aktiviert. Dies spart Zeit bei einer Reaktion auf die Ausfallsituation.

Es kann nun vorgesehen sein, dass dennoch ein Eingriff des Fahrers, beispielsweise eine Lenkbewegung oder eine Pedalbetätigung, den Stellsignalen der Steuervorrichtung überlagert wird. Alternativ dazu ist vorgesehen, bei aktivierter Steuervorrichtung einem Fahrer des Kraftfahrzeugs die Kontrolle über das Fahrzeug durch Entkoppeln einer Lenkhandhabe (zum Beispiel Lenkrad) und/oder einer Pedalerie (zum Beispiel Gaspedal und/oder Bremspedal) zu entziehen. Hierdurch ist vermieden, dass eine Fehlreaktion des Fahrers sich auf das Fahrverhalten des Kraftfahrzeugs auswirkt.

Da es sich bei dem Ausfall-Reglermodell um einen Regelalgorithmus für eine Notsituation handelt, ist bevorzugt auch vorgesehen, dass das Ausfall-Reglermodell eine vorbestimmte Notfallstrategie umsetzt. Beispielsweise kann vorgesehen sein, dass durch die Steuervorrichtung mittels der Reglereinheit die Benutzung einer Randbebauung einer Straße für eine Fahrzeugbremsung vorgesehen ist. So kann beispielsweise eine Fahrzeugflanke gegen eine Leitplanke oder das Kraftfahrzeug auf einen Grünstreifen gelenkt werden, um hierdurch das Kraftfahrzeug abzubremsen.

Bisher wurden Ausführungsformen beschrieben, bei welchen durch die Detektionseinrichtung eine vorbestimmte Ausfallsituation signalisiert wird. Bevorzugt ist allerdings vorgesehen, dass durch die Detektionseinrichtung mittels des Ausfallsignals eine aus mehreren unterschiedlichen Ausfallsituationen signalisiert wird, d.h. die Detektionseinrichtung ist zum Detektieren mehrerer unterschiedlicher Ausfallsituationen vorgesehen. Entsprechend ist jeweils ein jeweiliges Ausfall-Reglermodell für jeweils eine der unterschiedlichen Ausfallsituationen bereitgestellt. Für jede der Ausfallsituationen ist also ein Ausfall-Reglermodell vorgesehen oder bereitgestellt. Die Steuervorrichtung wählt dann entsprechend eines der Ausfall-Reglermodelle in Abhängigkeit von dem Ausfallsignal aus, um die Reglereinheit umzuschalten. Hierdurch reagiert also die Reglereinheit passend auf die aktuelle Ausfallsituation.

Um das erfindungsgemäße Verfahren in einem Kraftfahrzeug durchführen zu können, ist durch die Erfindung eine Steuervorrichtung für einen teilautonomen oder vollautonomen Fahrbetrieb des Kraftfahrzeugs vorgesehen. Die Steuervorrichtung weist eine Prozessoreinrichtung auf, die dazu eingerichtet ist, eine Ausführungsform des erfindungsgemäßen Verfahrens durchzuführen. Die Steuervorrichtung kann hierzu beispielsweise zumindest einen Mikroprozessor und/oder zumindest einen Mikrocontroller aufweisen. Des Weiteren kann die Prozessoreinrichtung einen Programmcode aufweisen, der dazu eingerichtet ist, beim Ausführen durch die Prozessorvorrichtung die Ausführungsform des erfindungsgemäßen Verfahrens durchzuführen. Der Programmcode kann in einem Datenspeicher der Prozessoreinrichtung gespeichert sein.

Zu der Erfindung gehört schließlich auch ein Kraftfahrzeug, welches die besagte Detektionseinrichtung zum Detektieren zumindest einer vorbestimmten Ausfallsituation aufweist, in welcher zumindest eine für eine Längsführung und/oder Querführung des Kraftfahrzeugs vorgesehene Fahrzeugkomponente funktionsuntüchtig geworden ist. Das Kraftfahrzeug weist des Weiteren eine Ausführungsform der erfindungsgemäßen Steuervorrichtung auf. Die Detektionseinrichtung kann in an sich bekannter Weise ausgestaltet sein und beispielsweise zumindest einen Sensor zum Detektieren der Funktionsuntüchtigkeit aufweisen. Die Funktionsuntüchtigkeit kann auch beispielsweise durch ein Steuergerät der jeweiligen Fahrzeugkomponente in einem Selbsttest erkannt und signalisiert werden. Die Detektionseinrichtung stellt dann eine verteilte Einrichtung dar, die durch die Steuergeräte der Fahrzeugkomponenten gebildet ist.

Das erfindungsgemäße Kraftfahrzeug ist bevorzugt als Kraftwagen, insbesondere als Personenkraftwagen oder Lastkraftwagen, ausgestaltet. Insbesondere ist die Steuervorrichtung für ein Führen des Kraftfahrzeugs mit Anhänger vorgesehen. Die zumindest eine Fahrzeugkomponente, die funktionsuntüchtig sein kann, kann dann auch Bestandteil des Anhängers sein.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs; und
- Fig. 2: eine Skizze zur Veranschaulichung einer Ausfallsituation.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

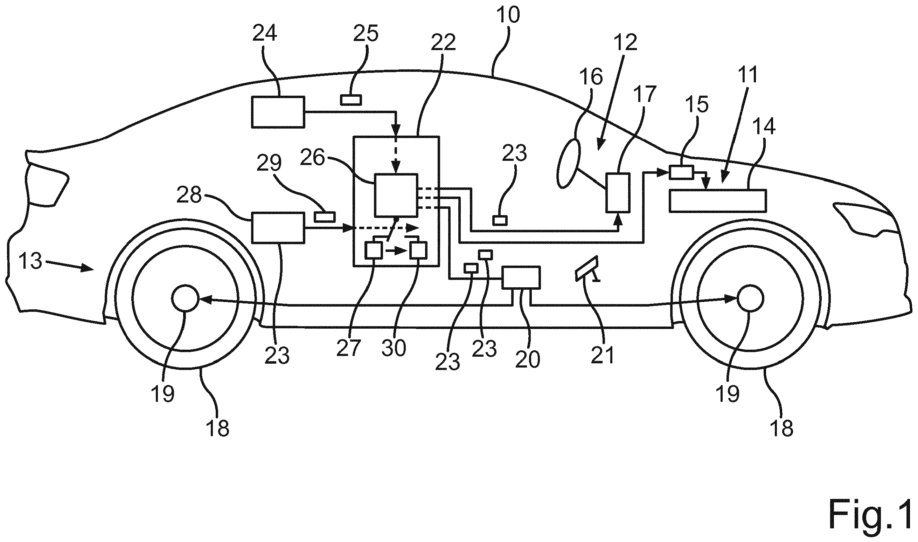

Fig. 1 zeigt ein Kraftfahrzeug 10, bei dem es sich beispielsweise um einen Kraftwagen, wie etwa einen Personenkraftwagen oder Lastkraftwagen, handeln kann. Das Fahrzeug 10 kann einen Anhänger ziehen, was in Fig. 1 der Übersichtlichkeit halber nicht dargestellt ist.

Zum Führen des Kraftfahrzeugs können in dem Kraftfahrzeug ein Fahrantrieb 11, eine Lenkanlage 12 und eine Bremsanlage 13 bereitgestellt sein. Der Fahrantrieb 11 kann zumindest einen Antriebsmotor 14 und ein zugehöriges Motorsteuergerät 15 aufweisen. Die Lenkanlage 12 kann eine Lenkhandhabe 16, zum Beispiel ein Lenkrad, und einen Lenkmotor 17 aufweisen, der einen Lenkwinkel an Rädern 18 des Kraftfahrzeugs 10 unabhängig von der Lenkhandhabe 16 einstellen kann. Die Bremsanlage 13 kann Radbremsen 19 und ein Bremssteuergerät 20 zum Stellen der Radbremsen 19 aufweisen. Der Fahrantrieb 11, die Lenkanlage 12 und die Bremsanlage 13 stellen jeweils eine Fahrzeugkomponente zur Längsführung (Lenkanlage 12 und bei ungleichmäßiger Bremsung auch die Bremsanlage 13) und/oder zur Querführung (Bremsanlage 13 und Fahrantrieb 11) dar.

Ein (nicht dargestellter) Fahrer des Kraftfahrzeugs 10 kann das Kraftfahrzeug 10 mittels der Lenkhandhabe 16 und einer Pedalerie 21 selbst führen. Eine Steuervorrichtung 22 kann darüber hinaus einen Teil der Fahrzeugführung (beispielsweise die Längsführung oder die Querführung) oder auch die gesamte Fahrzeugführung (Längsführung und Querführung) anstelle des Fahrers durchführen. Hierzu kann die Steuervorrichtung 22 zumindest ein Stellsignal 23 beispielsweise für das Motorsteuergerät 15, den Lenkmotor 17 und/oder das Bremssteuergerät 20 erzeugen. Die Steuervorrichtung 22 stellt somit eine Fahrerassistenz in dem Kraftfahrzeug 10 bereit.

Die Steuervorrichtung 22 kann hierzu mit einer Fahrzeugsensorik 24 gekoppelt sein, welche zumindest ein Sensorsignal 25 an die Steuervorrichtung 22 aussendet. Die Steuervorrichtung 22 kann in Abhängigkeit von dem zumindest einem Sensorsignal 25 das zumindest eine Stellsignal 23 erzeugen. Die Steuervorrichtung 22 kann hierzu eine Reglereinheit 26 zum Einregeln beispielsweise einer Längsdynamik und/oder Querdynamik des Kraftfahrzeugs 10 aufweisen. Hierdurch kann durch die Steuervorrichtung 22 zumindest ein Fahrmanöver durchgeführt werden. Für das Führen des Fahrzeugs 10 kann die Reglereinheit 26 ein Standard-Reglermodell 27 nutzen, welche das fahrdynamische Verhalten des Kraftfahrzeugs 10 beschreiben kann. Durch das Standard-Reglermodell 27 ist eine Zuordnungsvorschrift oder ein Regelalgorithmus beschrieben, um in Abhängigkeit von dem zumindest einen Sensorsignal 25 das zumindest eine Stellsignal 23 zu erzeugen.

Bei dem Kraftfahrzeug 10 kann zusätzlich sichergestellt werden, dass die Reglereinheit 26 der Steuervorrichtung 22 adäquat oder angepasst auf eine Ausfallsituation reagiert, bei welcher zumindest eine Fahrzeugkomponente, d.h. der Fahrantrieb 11 und/oder die Lenkanlage 12 und/oder die Bremsanlage 13, einen Ausfall zeigt, weil beispielsweise der Antriebsmotor 14, ein Lenkgestänge der Lenkanlage 12 und/oder eine oder mehrere Radbremsen 19, aufgrund eines Verschleißes oder einer Beschädigung funktionsuntüchtig wird, das heißt nicht in bestimmungsgemäßer Weise betätigt werden kann oder reagiert.

Die Ausfallsituation zumindest einer Fahrkomponente kann bei dem Kraftfahrzeug 10 durch eine Detektionseinrichtung 28 in an sich bekannter Weise beispielsweise auf Grundlage von Sensoren und/oder Selbsttests ermittelt werden. Eine detektierte Ausfallsituation kann die Detektionseinrichtung 28 mittels eines Ausfallsignals 28 an die Steuervorrichtung 22 signalisieren. In Abhängigkeit von dem Ausfallsignal 29 kann in der Steuervorrichtung 22 von dem Standard-Reglermodell 27 auf ein Ausfall-Reglermodell 30 umgeschaltet werden. In der Steuervorrichtung 22 nutzt nun die Reglereinheit 26 das Ausfall-Reglermodell 30, um in Abhängigkeit von dem zumindest einen Sensorsignal 25 das zumindest eine Stellsignal 23 zu erzeugen. Das Ausfall-Reglermodell 30 ersetzt somit in der Ausfallsituation das Standard-Reglermodell 27.

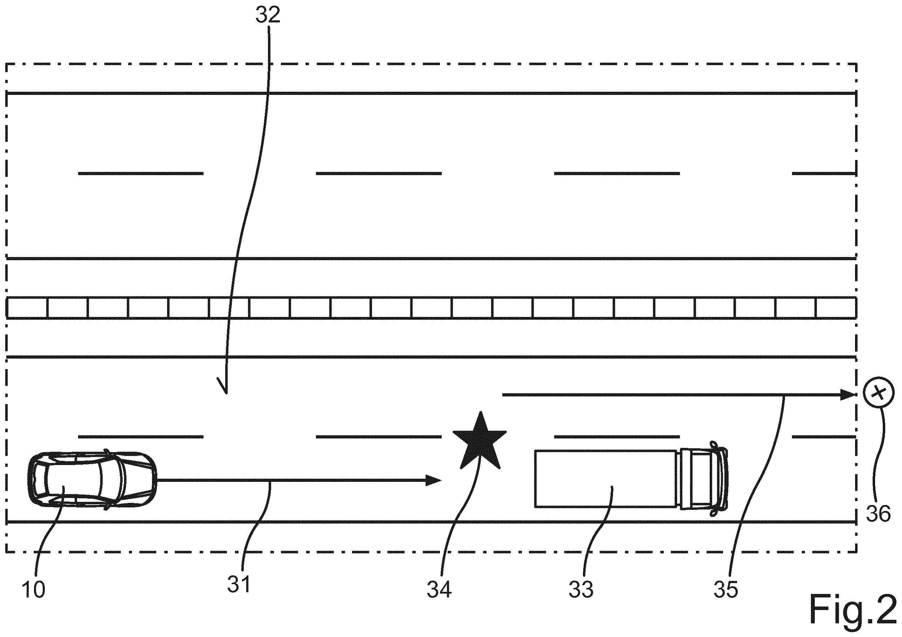

Fig. 2 veranschaulicht eine solche Ausfallsituation. Fig. 2 zeigt das Kraftfahrzeug 10 während einer Fahrt 31 auf einer Straße 32. Das Fahrzeug 10 kann sich einem Fremdfahrzeug 33 für ein Überholmanöver nähern. Das Kraftfahrzeug 10 kann hierbei durch die Steuervorrichtung 22 beispielsweise vollautonom auf der Grundlage des Standard-Reglermodells 27 oder auch teilautonom gefüllt werden. Es kann auch ein Fahren ausschließlich durch den Fahrer 10 (sogenanntes manuelles Fahren) vorgesehen sein. Während beispielsweise des Überholmanövers kann es zu einem Ausfall 34 einer Fahrzeugkomponente kommen. Der Ausfall 34 stellt dann eine Ausfallsituation dar.

Der Ausfall 34 kann durch die Detektionseinrichtung 28 detektiert und entsprechend durch das Ausfallsignal 29 der Steuervorrichtung 22 signalisiert werden. Die Steuervorrichtung 22 kann auf das Ausfall-Reglermodell 30 umschalten, woraufhin das Kraftfahrzeug 10 durch die Steuervorrichtung 22 manövriert oder geführt werden kann. Es kann ein Sicherungsmanöver 35 vorgesehen sein, beispielsweise das Ausweichen an dem Fremdfahrzeug 33 vorbei und das Abbremsen des Kraftfahrzeugs 10, um einen vorbestimmten sicheren Zustand 36, beispielsweise den Stillstand des Kraftfahrzeugs 10, trotz des Ausfalls 34 zu erreichen.

Kommt es somit bei dem Kraftfahrzeug 10 zu einer unvorhergesehenen Situation, nämlich einer Ausfallsituation, wie beispielsweise einem Reifenplatzer oder Aquaplaning oder µ-Split, übernimmt die Steuervorrichtung 22 das Führen des Kraftfahrzeugs 10 zum Einregeln einer Längsdynamik und/oder Querdynamik. Dies stabilisiert und bremst das Kraftfahrzeug 10 bis zum Stillstand als einen möglichen sicheren Zustand 36. Die Stabilisierung kann beispielsweise durch selektives Aktivieren der einzelnen Radbremsen 19 geschehen. Zudem lassen sich Notfallstrategien realisieren, wie zum Beispiel das Benutzen einer Leitplanke zur Fahrzeugbremsung im Notfall. Die Übernahme der Führung des Kraftfahrzeugs 10 durch die Steuervorrichtung 22 kann beispielsweise durch Entziehen der Kontrollen, also der Pedalerie 21 und/oder der Lenkhandhabe 16, vom Fahrzeugführer oder Fahrer erreicht werden. Es kann aber auch eine Möglichkeit vorgesehen sein, dass der Fahrer weiter in die Kontrolle des Kraftfahrzeugs 10 eingreift.

Diese Assistenzfunktion kann in einem bereits verbauten Steuergerät oder als separates Steuergerät realisiert sein, dass dann jeweils die Steuervorrichtung 22 darstellt. Der Regelalgorithmus, wie er durch das Ausfall-Reglermodell 30 realisiert ist, kann für diese Notfall-Assistenzfunktion aus gemessenen Reaktionen von Profifahrern oder Rennfahrern abgeleitet werden.

Während der Ausfallsituation z.B. mit autonomer Stabilisierungs- und Abbremsphase kann zudem in Abhängigkeit von dem Ausfall 34 beispielsweise auch ein Notruf abgesetzt werden und/oder eine Sprechverbindung zu einer Notrufstelle mittels einer Mobilfunkanlage des Kraftfahrzeugs 10 und/oder eines mit dem Kraftfahrzeug 10 gekoppelten Smartphones aufgebaut werden.

Da der Fahrer in Ausfallsituationen oder Notfallsituationen, wie beispielsweise einen Reifenplatzer oder Aquaplaning oder µ-Split, nicht in der Lage sind, adäquat zu reagieren, reagiert die Steuervorrichtung 22 selbstständig auf diese Ausfallsituation. Die beschriebene Notfall-Assistenzfunktion der Steuervorrichtung 22 stellt hierbei spezialisiertes Regelverhalten mittels des Ausfall-Reglermodells 30 bereit. Die Steuervorrichtung 22 kann hierbei ein Ausfall-Reglermodells 30 für das Führen eines Personenkraftwagens oder Lastkraftwagens mit Anhänger bereitstellen.

Die beschriebenen Ausfälle 34 sind sogenannte interne Notfallursachen, die also eine Funktionsuntüchtigkeit zumindest einer Fahrzeugkomponente betreffen, sodass ein Standard-Reglermodell 27 keine adäquates Stellsignal 23 bereitstellen könnte, da das Standard-Reglermodell 30 das veränderte oder geänderte fahrdynamische Verhalten des Kraftfahrzeugs 10 nicht berücksichtigt. Erst das Umschalten auf ein Ausfall-Reglermodell 30 macht es möglich, dass die Steuervorrichtung 22 mittels der Regeleinheit 26 das Kraftfahrzeug 10 weiterhin stabilisieren kann und/oder eine Längsdynamik und/oder Querdynamik auf einen vorbestimmten Sollverlauf einregeln kann.

Insgesamt zeigt das Beispiel, wie durch die Erfindung in einem Kraftfahrzeug ein autonomer Notfall-Assistent bereitgestellt werden kann.

## Patentansprüche

1. Verfahren zum teilautonomen oder vollautonomen Führen eines Kraftfahrzeugs (10) durch eine Steuervorrichtung (22), wobei die Steuervorrichtung (22) mit zumindest einer Fahrzeugkomponente (11, 12, 13) für eine Längsführung und/oder Querführung des Kraftfahrzeugs (10) gekoppelt ist und eine Reglereinheit (26) bereitstellt, um auf der Grundlage eines Reglermodells (27, 30) zumindest ein Stellsignal (23) für die zumindest ein Fahrzeugkomponente (11, 12, 13) zu erzeugen, wobei
durch die Steuervorrichtung (22) ein Ausfall-Reglermodell (30) bereitgestellt wird, durch welches eine Ausfallsituation (34), in welcher die zumindest eine Fahrzeugkomponente (11, 12, 13) funktionsuntüchtig ist, modelliert ist, und
aus einer Detektionseinrichtung (28) während einer Fahrt (31) des Kraftfahrzeugs (10) ein die Ausfallsituation (34) signalisierendes Ausfallsignal (29) empfangen wird und
in Abhängigkeit von dem Ausfallsignal (29) in der Reglereinheit (26) von einem Standard-Reglermodell (27), welches die zumindest eine Fahrzeugkomponenten (11, 12, 13) als funktionstüchtig annimmt, auf das Ausfall-Reglermodell (30) umgeschaltet wird und das Kraftfahrzeug (10) mittels der umgeschalteten Reglereinheit (26) durch Erzeugen der Stellsignale (23) in einen vorbestimmten sicheren Zustand (36) manövriert wird, wobei
vorgesehen ist, dass zunächst ein Fahrer des Kraftfahrzeugs (10) das Kraftfahrzeug (10) mittels einer Lenkhandhabe (16) und einer Pedalerie (21) selbst führt und dann
in Abhängigkeit von dem Ausfallsignal (29) die Steuervorrichtung (22) ohne Fahrereinwirkung für das Manövrieren des Kraftfahrzeugs (10) aktiviert wird und
die Steuervorrichtung (22) das Führen des Kraftfahrzeugs (10) zum Einregeln der Längsdynamik und der Querdynamik übernimmt, **dadurch gekennzeichnet, dass**
durch das Ausfall-Reglermodell (30) ein Verhalten zumindest einer vorbestimmten Person nachgebildet wird.

2. Verfahren nach Anspruch 1, wobei durch das Ausfall-Reglermodell (30) eine der folgenden Ausfallsituationen (34) modelliert ist: ein Achsbruch, ein Reifenplatzer, ein Federbeinbruch, Ausbleiben der Traktionsleistung, ein Ausbleiben einer Bremswirkung, Aquaplaning, ungleichmäßige Reifenhaftung, eine verschlissene Bremse (19).

3. Verfahren nach einem der vorhergehenden Ansprüche, wobei durch das Ausfall-Reglermodell (30) eine im Vergleich zur Standard-Reglermodell (27) veränderte Längsdynamikregelung und/oder Querdynamikregelung durch die Reglereinheit (26) durchgeführt wird.

4. Verfahren nach einem der vorhergehenden Ansprüche, wobei bei aktivierter Steuervorrichtung (22) dem Fahrer des Kraftfahrzeugs (10) die Kontrolle über das Kraftfahrzeug (10) durch Entkoppeln einer Lenkhandhabe (16) und/oder einer Pedalerie (21) entzogen wird.

5. Verfahren nach einem der vorhergehenden Ansprüche, wobei das Ausfall-Reglermodell (30) eine vorbestimmte Notfallstrategie, insbesondere Benutzung einer Randbebauung einer Straße (32) für eine Fahrzeugbremsung, umsetzt.

6. Verfahren nach einem der vorhergehenden Ansprüche, wobei jeweils ein Ausfall-Reglermodell (30) für mehrere unterschiedliche Ausfallsituationen (34) bereitgestellt ist und aus der Detektionseinrichtung (28) über das Ausfallsignal (29) empfangen wird, welche Ausfallsituation (34) detektiert wurde, und durch die Steuervorrichtung (22) eines der Ausfall-Reglermodelle (30) für das Umschalten ausgewählt wird.

7. Verfahren nach einem der vorhergehenden Ansprüche, wobei in Abhängigkeit von der Ausfallsituation (34) ein Notruf abgesetzt wird und/oder eine Sprechverbindung zu einer Notrufstelle mittels einer Mobilfunkanlage des Kraftfahrzeugs (10) und/oder eines mit dem Kraftfahrzeug (10) gekoppelten Smartphones aufgebaut wird.

8. Steuervorrichtung (22) für einen teilautonomen oder vollautonomen Fahrbetrieb eines Kraftfahrzeugs (10), wobei die Steuervorrichtung (22) eine Prozessoreinrichtung aufweist, die dazu eingerichtet ist, ein Verfahren nach einem der vorhergehenden Ansprüche durchzuführen.

9. Kraftfahrzeug (10) mit einer Detektionseinrichtung (28) zum Detektieren zumindest einer vorbestimmten Ausfallsituation (34), in welcher zumindest eine für eine Längsführung und/oder Querführung des Kraftfahrzeugs (10) vorgesehene Fahrzeugkomponente (11, 12, 13) funktionsuntüchtig ist, und mit einer Steuervorrichtung (22) nach Anspruch 8.

## Claims

1. Method for partially or fully autonomously driving a motor vehicle (10) using a control device (22), wherein the control device (22) is coupled to at least one vehicle component (11, 12, 13) for longitudinal control and/or lateral control of the motor vehicle (10), and provides a controller unit (26) for generating at least one control signal (23) for the at least one vehicle component (11, 12, 13) based on a controller model (27, 30),
wherein
the control device (22) provides a failure controller model (30), via which a failure situation (34) in which the at least one vehicle component (11, 12, 13) is non-functional, is modelled, and
a failure signal (29) signalling the failure situation (34) is received from a detection apparatus (28) during a drive (31) of the motor vehicle (10), and
depending on the failure signal (29), in the controller unit (26), a standard controller model (27) which assumes that the at least one vehicle components (11, 12, 13) is functional is switched to the failure controller model (30), and the motor vehicle (10) is manoeuvred into a predetermined safe state (36) by means of the switched controller unit (26) by generating the control signals (23), wherein
it is provided that a driver of the motor vehicle (10) first drives the motor vehicle (10) using a steering handle (16) and/or a pedal (21) and then,
depending on the failure signal (29), the control device (22) is activated without driver intervention for manoeuvring the motor vehicle (10) and
the control device (22) takes over the driving of the motor vehicle (10) in order to adjust the longitudinal dynamics and/or the lateral dynamics,
**characterised in that**
the failure controller model (30) simulates a behaviour of at least one predetermined person.

2. Method according to claim 1, wherein the failure controller model (30) models one of the following failure situations (34): a broken axle, a burst tyre, a broken strut, lack of traction, a lack of braking power, aquaplaning, uneven tyre grip, a worn brake (19).

3. Method according to any of the preceding claims, wherein the failure controller model (30) carries out a longitudinal dynamic control and/or lateral dynamic control by the controller unit (26) which is different from the standard controller model (27).

4. Method according to any of the preceding claims, wherein, when the control device (22) is activated, control over the motor vehicle (10) is removed from the driver of the motor vehicle (10) by decoupling a steering handle (16) and/or a pedal (21).

5. Method according to any of the preceding claims, wherein the failure controller model (30) implements a predetermined emergency strategy, in particular usage of a roadside structure of a road (32) to decelerate the vehicle.

6. Method according to any of the preceding claims, wherein one failure controller model (30) is respectively provided for several different failure situations (34) and the information is received, from the detection apparatus (28) via the failure signal (29), as to which failure situation (34) has been detected, and is selected by the control device (22) of one of the failure controller models (30) for the switching.

7. Method according to any of the preceding claims, wherein, depending on the failure situation (34), an emergency call is made and/or a voice connection to an emergency call centre is established by means of a mobile radio system of the motor vehicle (10) and/or a smartphone coupled to the motor vehicle (10).

8. Control device (22) for a partially or fully autonomous driving operation of a motor vehicle (10), wherein the control device (22) has a processor apparatus which is configured to carry out a method according to any of the preceding claims.

9. Motor vehicle (10) having a detection apparatus (28) for detecting at least one predetermined failure situation (34), in which at least one vehicle component (11, 12, 13) provided for a longitudinal control and/or a lateral control of the motor vehicle (10) is functional non-efficient, and having a control device (22) according to claim 8.

## Revendications

1. Procédé pour la conduite partiellement autonome ou totalement autonome d'un véhicule automobile (10) par un dispositif de commande (22), dans lequel le dispositif de commande (22) est couplé avec au moins un composant de véhicule (11, 12, 13) pour un guidage longitudinal et/ou guidage transversal du véhicule automobile (10) et met à disposition une unité de régulation (26) pour générer sur la base d'un modèle de régulation (27, 30) au moins un signal de réglage (23) pour l'au moins un composant de véhicule (11, 12, 13), dans lequel
par le dispositif de commande (22) un modèle de régulation de panne (30) est mis à disposition, par lequel une situation de panne (34), dans laquelle l'au moins un composant de véhicule (11, 12, 13) est inapte à fonctionner, est modélisée, et
un signal de panne (29) signalant la situation de panne (34) est reçu depuis un dispositif de détection (28) pendant une conduite (31) du véhicule automobile (10) et
en fonction du signal de panne (29) dans l'unité de régulation (26), il est commuté d'un modèle de régulation standard (27), lequel suppose l'au moins un composant de véhicule (11, 12, 13) apte à fonctionner, au modèle de régulation de panne (30) et le véhicule automobile (10) est manœuvré au moyen de l'unité de régulation (26) commutée par génération des signaux de réglage (23) dans un état sûr prédéterminé (36), dans lequel
il est prévu que d'abord un conducteur du véhicule automobile (10) conduise lui-même le véhicule automobile (10) au moyen d'une manette de direction (16) et de pédales (21) et ensuite
en fonction du signal de panne (29), le dispositif de commande (22) est activé sans influence du conducteur pour la manœuvre du véhicule automobile (10) et
le dispositif de commande (22) prend en charge la conduite du véhicule automobile (10) pour le rodage de la dynamique longitudinale et de la dynamique transversale,
**caractérisé en ce que**
un comportement d'au moins une personne prédéterminée est reproduit par le modèle de régulation de panne (30).

2. Procédé selon la revendication 1, dans lequel une des situations de panne (34) suivantes est modélisée par le modèle de régulation de panne (30) : une rupture d'axe, une crevaison, une rupture de jambe de force, absence de puissance de traction, une absence de freinage, aquaplaning, adhérence irrégulière des pneus, un frein usé (19).

3. Procédé selon l'une quelconque des revendications précédentes, dans lequel une régulation de dynamique longitudinale et/ou régulation de dynamique transversale modifiée par rapport au modèle de régulation standard (27) est réalisée par l'unité de régulation (26) par le modèle de régulation de panne (30).

4. Procédé selon l'une quelconque des revendications précédentes, dans lequel lorsque le dispositif de commande (22) est activé, le contrôle du véhicule automobile (10) est retiré au conducteur du véhicule automobile (10) par découplage d'une manette de direction (16) et/ou des pédales (21).

5. Procédé selon l'une quelconque des revendications précédentes, dans lequel le modèle de régulation de panne (30) convertit une stratégie d'urgence prédéterminée, en particulier l'utilisation d'un aménagement latéral d'une route (32) pour un freinage de véhicule.

6. Procédé selon l'une quelconque des revendications précédentes, dans lequel respectivement un modèle de régulation de panne (30) est mis à disposition pour plusieurs situations de panne (34) différentes et il est reçu depuis le dispositif de détection (28) par le biais du signal de panne (29), quelle situation de panne (34) a été détectée, et un des modèles de régulation de panne (30) pour la commutation est sélectionné par le dispositif de commande (22).

7. Procédé selon l'une quelconque des revendications précédentes, dans lequel en fonction de la situation de panne (34) un appel d'urgence est émis et/ou une communication vocale vers un centre d'appels d'urgence est établie au moyen d'une installation de téléphonie mobile du véhicule automobile (10) et/ou d'un smartphone couplé au véhicule automobile (10).

8. Dispositif de commande (22) pour une conduite partiellement autonome ou totalement autonome d'un véhicule automobile (10), dans lequel le dispositif de commande (22) présente un dispositif de processeur, qui est aménagé pour réaliser un procédé selon l'une quelconque des revendications précédentes.

9. Véhicule automobile (10) avec un dispositif de détection (28) pour la détection d'au moins une situation de panne prédéterminée (34), dans laquelle au moins un composant de véhicule (11, 12, 13) prévu pour un guidage longitudinal et/ou guidage transversal du véhicule automobile (10) est inapte à fonctionner, et avec un dispositif de commande (22) selon la revendication 8.
